# FASCICULE DE BREVET EUROPEEN

(11) **EP 1 117 544 B1**
(45) Date de publication et mention de la délivrance du brevet: **05.06.2002**
(21) Numéro de dépôt: 98946525.7
(22) Date de dépôt: 29.09.1998
(51) Int. Cl.: B60B 9/26

(54) **ROUE DEFORMABLE NON PNEUMATIQUE**
VERFORMBARES NICHTPNEUMATISCHES RAD
DEFORMABLE NON-PNEUMATIC TYRE

(43) Date de publication de la demande: 25.07.2001
(73) Titulaire: Compagnie Générale des Etablissements MICHELIN-MICHELIN & CIE, 63040 Clermont-Ferrand Cedex 09 (FR)
(72) Inventeur: HOTTEBART, François, F-63130 Royat (FR)
(74) Mandataire: Dequire, Philippe Jean-Marie Denis
(86) Numéro de dépôt international: FR9802084
(87) Numéro de publication internationale: WO0018592

(56) Documents cités:
- EP-A- 0 607 892
- WO-A-98/43833
- DE-C- 297 656
- DE-C- 299 305
- US-A- 1 331 716
- US-A- 1 389 938
- US-A- 3 234 988
- US-A- 4 006 765

## Description

La présente invention se rapporte aux roues non pneumatiques, notamment celles susceptibles d'être utilisées en substitution des pneumatiques sur les véhicules.

On a depuis longtemps essayé de concevoir de telles roues non pneumatiques, c'est-à-dire fonctionnant sans air sous pression, afin de s'affranchir de tout problème posé par les crevaisons ou les diminutions de la pression de gonflage des pneumatiques.

Parmi de très nombreuses propositions, on peut citer celle décrite dans le brevet US 3 234 988. Ce brevet décrit une roue déformable non pneumatique comprenant un disque, un élément intérieur fixé au disque, un élément extérieur annulaire destiné à venir en contact avec le sol, flexible et sensiblement inextensible et une pluralité de rayons disposés entre les éléments intérieur et extérieur. L'élément extérieur a une longueur telle qu'il sollicite lesdits rayons en compression radiale. Autrement dit, ils sont précontraints (c'est-à-dire préchargés). Au-delà d'un certain seuil de sollicitation, puisque les rayons sont sollicités de bout, l'effort de réaction orienté radialement que peut développer chacun de ces rayons reste constant. La roue comporte encore des moyens de stabilisation des positions relatives des éléments extérieur et intérieur. Les rayons fléchissent dans un plan méridien et les moyens de stabilisation limitent les déplacements relatifs axiaux des éléments intérieur et extérieur.

Cette roue déformable utilise comme liaison entre les éléments intérieur et extérieur des rayons précontraints au-delà de leur charge de flambement. Ainsi, en cas d'augmentation de la charge supportée par la roue, cette augmentation n'est compensée que par une augmentation du nombre de rayons supportant effectivement la charge. Il en résulte une augmentation de la longueur du contact entre la roue et le sol. Un tel comportement est très proche de celui d'un pneumatique.

Cette roue présente cependant un inconvénient majeur. Les différents rayons fléchissent dans leurs plans méridiens mais n'ont pratiquement pas de possibilité de déformation circonférentielle car leur section présente une grande inertie dans la direction circonférentielle. Or, lors d'un roulage, des efforts longitudinaux importants sont subis par l'élément extérieur en contact avec le sol, notamment dans l'aire de contact, ce qui entraîne une ruine rapide de la roue non pneumatique précédente.

L'invention a pour objet une structure déformable destinée à constituer, par exemple avec un disque, une roue non pneumatique présentant les mêmes avantages de confort et de comportement tout en résolvant le problème précédent.

La structure déformable pour véhicule, selon l'invention, destinée à rouler autour d'un axe de rotation, comprend un élément intérieur annulaire centré sur l'axe, un élément extérieur annulaire formant bande de roulement, flexible et sensiblement inextensible, disposé radialement extérieurement relativement à l'élément intérieur, une pluralité de rayons disposés entre les éléments intérieur et extérieur, chaque rayon étant propre à opposer à une sollicitation de compression radiale, au-delà d'un seuil donné, un effort sensiblement constant, l'élément extérieur annulaire ayant une longueur telle que les rayons sont précontraints en compression radiale, ainsi que des moyens de stabilisation des positions relatives des éléments intérieur et extérieur. Cette structure de roulage est caractérisée en ce que les rayons sont conformés et disposés entre l'élément intérieur et l'élément extérieur de telle sorte que leur flexibilité dans un plan méridien est très inférieure à leur flexibilité dans un plan circonférentiel et en ce que les moyens de stabilisation limitent l'amplitude d'une rotation relative circonférentielle entre les éléments intérieur et extérieur.

La roue obtenue à partir de la structure déformable selon l'invention, présente l'avantage suivant : chaque rayon peut se déformer dans une direction circonférentielle, notamment pendant le roulage, lorsqu'il se trouve dans la zone de contact entre l'élément extérieur et le sol.

De préférence, les rayons sont précontraints au-delà de leur charge de flambement. Les moyens de stabilisation peuvent aussi comprendre des éléments de liaison élastiques reliant de façon non radiale les éléments intérieur et extérieur, tels des câbles ou des poutres élancées. Ces moyens de stabilisation sont précontraints en extension à l'état repos pour exercer immédiatement un effort de rappel lors d'un déplacement relatif de rotation entre les éléments intérieur et extérieur. Les extrémités des rayons peuvent être fixées par encastrement ou par des articulations dans l'élément intérieur et/ou l'élément extérieur. Les moyens de stabilisation peuvent aussi être un voile mince précontraint en extension radiale.

La structure déformable selon l'invention peut aussi constituer un insert de sécurité destiné à être monté dans un ensemble constitué d'un pneumatique et d'une jante.

Plusieurs modes de réalisation de l'invention sont maintenant décrits à l'aide des figures suivantes :
- la figure 1 est une vue axiale d'une roue constituée d'une structure déformable selon l'invention fixée à un disque ;
- la figure 2 est une coupe méridienne de la roue de la figure 1 ;
- la figure 3 présente une vue axiale partielle d'une roue similaire à celle des figures 1 et 2, équipée de moyens de stabilisation ;
- la figure 4 présente des rayons doubles et articulés, à l'état repos 4a, et à l'état déformé 4b ; et
- la figure 5 présente un autre mode de réalisation des rayons, doubles et encastrés, à l'état repos 5a, et à l'état déformé 5b ;
- la figure 6 présente des rayons de la roue de la figure 1 en charge, en dehors de l'aire de contact 6a et dans l'aire de contact 6b ;
- la figure 7 présente des moyens de stabilisation de la roue de la figure 6 en charge, en dehors de l'aire de contact 7a et dans l'aire de contact 7b.

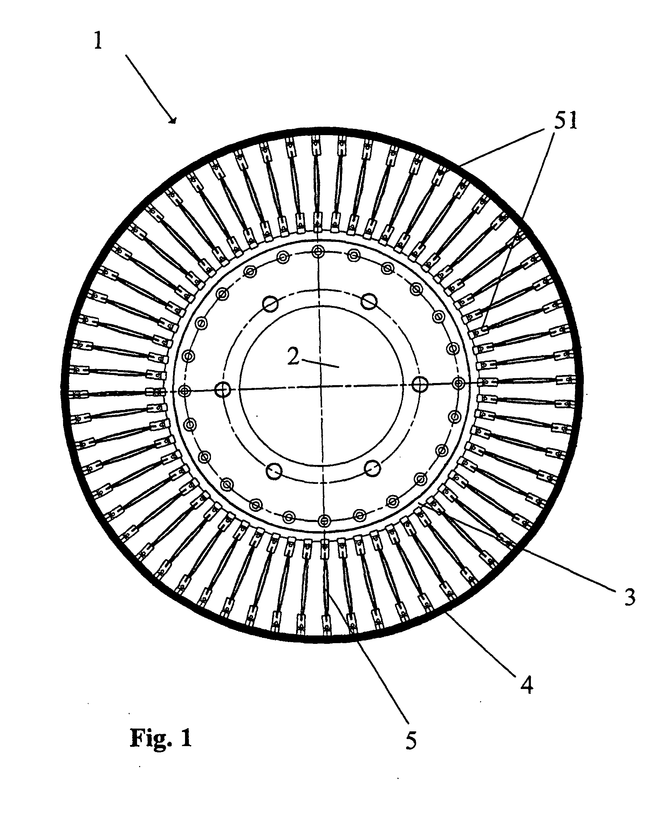

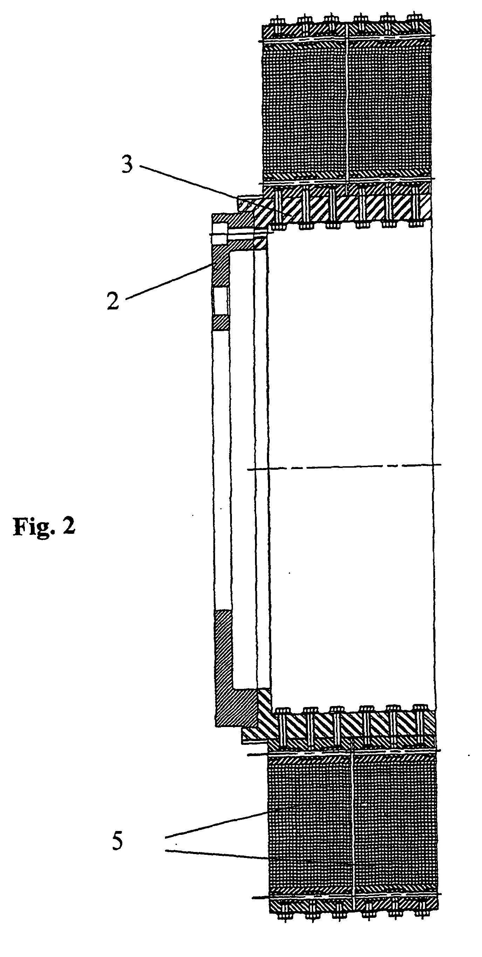

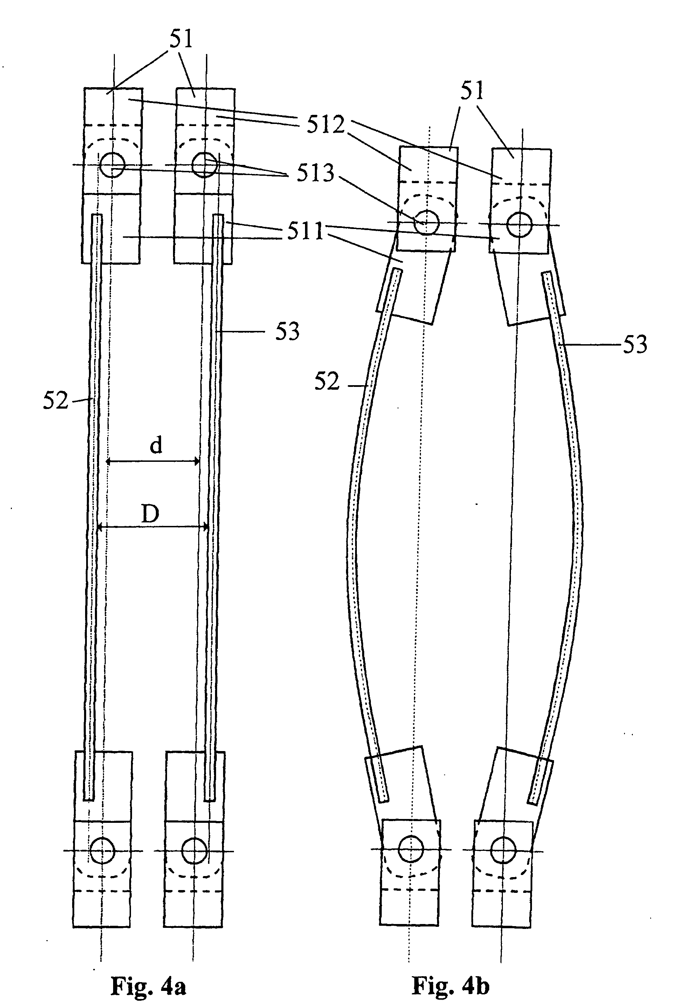

Les figures 1 et 2 présentent, en vue axiale et en coupe méridienne respectivement, une roue non pneumatique constituée d'une structure déformable 1 selon l'invention fixée à un disque 2. La structure déformable 1 comprend un élément intérieur 3 lié au disque 2, un élément extérieur annulaire 4 et des rayons 5 reliant l'élément intérieur 3 et l'élément extérieur 4. Les rayons 5 sont répartis en deux ensembles de 60 éléments disposés axialement côte à côte (figure 2). Les rayons 5 ont une forme parallélépipédique avec une épaisseur petite relativement à leur longueur et leur largeur. Cette forme leur permet de fléchir aisément dans la direction de leur épaisseur. Les rayons 5 ont leurs deux extrémités longitudinales fixées respectivement à l'élément intérieur 3 et à l'élément extérieur 4 par des articulations 51. Ces rayons sont disposés entre les éléments intérieur 3 et extérieur 4 de telle sorte que leur longueur est dans une direction radiale, leur largeur est dans une direction axiale et leur épaisseur est dans une direction circonférentielle. En conséquence, les rayons 5 peuvent fléchir sous une compression radiale de leurs extrémités longitudinales. Cette flexion est circonférentielle. La flexibilité des rayons 5 dans un plan méridien est donc très inférieure à leur flexibilité dans un plan circonférentiel. Dans le mode de réalisation des figures 1, 2 et 4, les articulations 51 sont composées de deux parties 511 et 512 (voir fig. 4), fixées entre elles par un axe 513. Ce mode de fixation permet une rotation libre entre les deux parties 511 et 512 des articulations 51. Les axes 513 sont disposés dans la direction axiale de la roue. Ce mode de liaison autorise une rotation des rayons 5 relativement aux éléments intérieur et extérieur dans le plan de la roue. Les rayons 5 sont, par exemple, réalisés en un matériau polymérique renforcé de fibres de verre. L'élément extérieur annulaire 4 comprend une virole métallique de faible épaisseur (de l'ordre de 0,1 à 1 mm) recouverte d'une couche élastomérique destinée à venir en contact avec le sol (cette couche élastomérique n'est pas représentée à la figure 2). L'élément extérieur a ainsi une faible rigidité de flexion et est sensiblement inextensible. La longueur circonférentielle de cet élément extérieur 4 est telle que les rayons 5 sont tous précontraints en compression axiale au-delà de leur charge de flambement. Tous ces rayons 5 sont donc en état de post flambement. En conséquence, la force de réaction qu'ils opposent à l'élément intérieur 3 et à l'élément extérieur 4 est sensiblement constante et indépendante de l'amplitude de leur compression radiale.

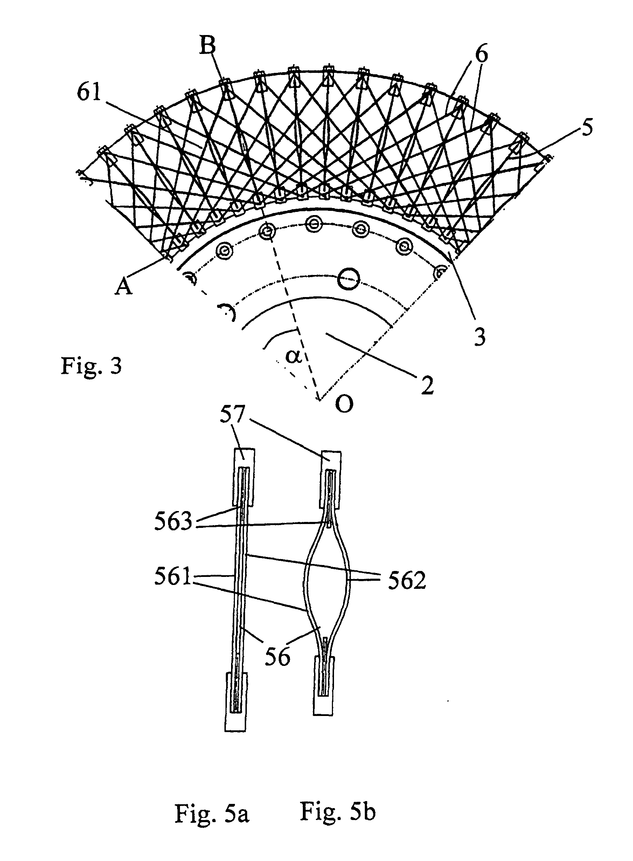

La roue telle que présentée aux figures 1 et 2 est en état d'équilibre instable et l'énergie emmagasinée dans les rayons 5 tend à se libérer par un déplacement de rotation de l'élément extérieur 4 relativement à l'élément intérieur 3. Pour limiter la rotation relative entre l'élément intérieur 3 et l'élément extérieur 4, la structure déformable 1 est pourvue de moyens de stabilisation présentés à la figure 3. Ces moyens de stabilisation sont composés, par exemple, de câbles 6 reliant l'élément intérieur 3 et l'élément extérieur annulaire 4. A la figure 3, on voit le câble 61 fixé en A à l'élément intérieur 3 et fixé en B à l'élément extérieur 4. O étant sur l'axe de rotation de la roue, l'angle AOB = α est, dans l'exemple représenté et au repos, égal à 30 degrés. Cet angle AOB peut varier de 1 à 45 degrés et préférentiellement entre 25 et 35 degrés. Les câbles 6 sont conformés et disposés pour être en tension au repos. Ces câbles 6 vont ainsi contenir le déplacement de rotation de l'élément extérieur annulaire 4 relativement à l'élément intérieur 3. Des déplacements relatifs ponctuels dans l'aire de contact restent toutefois possibles. La raideur, la disposition, la précontrainte d'extension et le nombre de ces câbles influencent la propension à conserver globalement la position d'équilibre présentée à la figure 1.

D'autre part, ces câbles permettent de régler la raideur circonférentielle de la roue selon leur propre raideur en extension ainsi qu'en fonction de leur inclinaison relativement à la direction circonférentielle. Les câbles peuvent aussi être de plusieurs raideurs différentes de part et d'autre de leur point d'ancrage dans l'élément intérieur et l'élément extérieur ce qui entraîne une variation de la réponse de la roue à un couple appliqué circonférentiellement. On peut aussi modifier les angles d'inclinaison de part et d'autre de leurs points d'ancrage pour obtenir une telle asymétrie de réponse mécanique. On peut aussi substituer aux câbles des éléments plus monolithiques ou tout moyen de stabilisation équivalent.

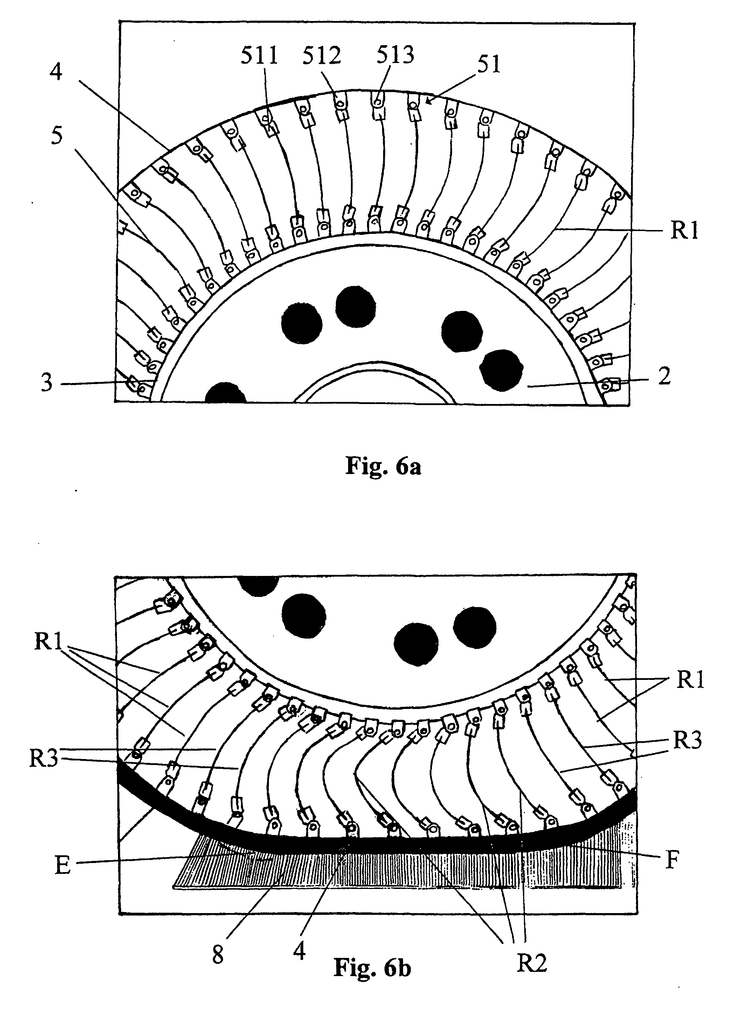

Les figures 4 et 5 présentent d'autres modes de disposition et de liaison des rayons aux éléments intérieur 3 et extérieur 4. A la figure 4, on voit deux rayons 52 et 53, avec leurs articulations 51. Comme précédemment, les articulations 51 comportent deux parties, la première 511, où une extrémité longitudinale du rayon 52, 53 est encastrée, et la seconde 512, rigidement fixée à l'élément intérieur ou à l'élément extérieur. Ces deux parties sont reliées par un axe 513 disposé, roue montée, dans la direction axiale de la structure déformable 1. Dans le mode de réalisation de la figure 4, les rayons sont disposés entre les éléments intérieur et extérieur circonférentiellement deux par deux avec comme précédemment leur plan de fléchissement orienté circonférentiellement. Les extrémités longitudinales des rayons 52 et 53 sont encastrées dans les supports 511 de telle sorte que la distance D séparant les deux rayons est supérieure à la distance d séparant les deux axes 513. En conséquence, lors d'une compression axiale, un couple s'applique sur les rayons et impose une flexion circonférentielle des deux rayons dans deux directions opposées telles que leurs parties centrales s'écartent (figure 4 b). Ce montage a l'avantage de faciliter le flambement des rayons toujours dans la même direction.

La figure 5 présente un rayon double 56 encastré dans un support 57. Contrairement aux modes de réalisation précédents, ce support 57 comprend une seule partie rigidement liée aux éléments intérieur ou extérieur. Le rayon 56 est constitué de deux demi-rayons parallélépipédiques 561 et 562 disposés circonférentiellement côte à côte et encastrés dans les supports 57. Les supports 57 sont fixés aux éléments intérieur et extérieur. Ces deux demi-rayons sont séparés circonférentiellement par une plaque 563. Cette plaque oriente, comme précédemment, la flexion circonférentielle des deux demi-rayons dans deux directions opposées telles que leurs parties centrales s'écartent (figure 5 b).

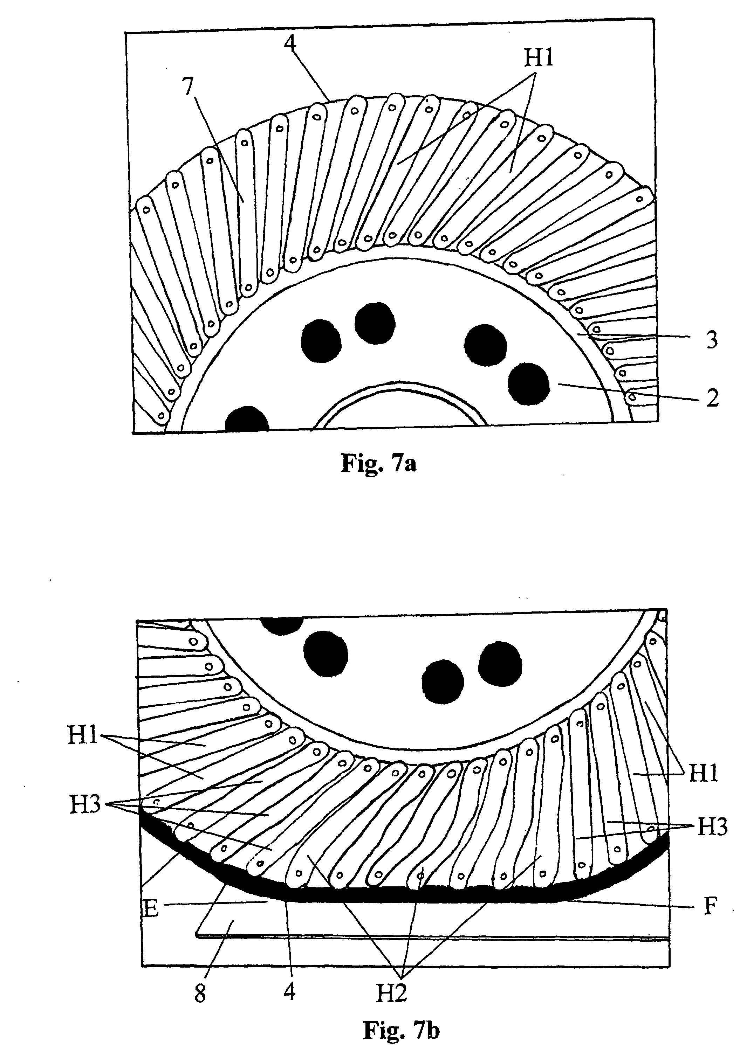

Les figures 6 et 7 illustrent, de façon schématique, le comportement d'une roue comportant une structure déformable 1 lors d'un écrasement sur un sol plan. Cette roue comprend deux ensembles de rayons 5 similaires à ceux des figures 1, 2 et 3 et des moyens de stabilisation 7 constitués par deux ensembles de poutres de section carrée en matériau polyuréthanne. Les deux ensembles de poutres 7 ont une inclinaison non radiale et sont disposés symétriquement de part et d'autre de la direction radiale, comme l'illustre la figure 3. Le module d'extension de ces poutres est de l'ordre de 20 MPa. L'orientation des poutres 7 est similaire à celle des câbles 6 présentée à la figure 3. Aux figures 6b et 7b seulement, on a représenté l'élément extérieur 4 avec une couche de matériau élastomérique assurant le contact avec le sol 8. Cette couche a une épaisseur de l'ordre de 10 mm. Pour des raisons de clarté de présentation, on a représenté aux figures 6a et 6b l'évolution du comportement d'un seul des deux ensembles de rayons 5 en dehors de l'aire de contact (6a) et dans l'aire de contact (6b), et aux figures 7a et 7b, l'évolution d'un seul des deux ensembles de poutres dans (7b) et en dehors de l'aire de contact (7a).

Lors d'un écrasement de la roue 1 sur un sol 8, on constate que les rayons 5 restent tous en état de post flambement mais avec de fortes variations de compression radiale. Trois cas se présentent : en dehors de l'aire de contact (6a) - rayons R1 - les rayons ont une légère compression radiale ; dans l'aire de contact, entre les points E et F, les rayons R2 ont une compression radiale nettement plus importante ; à proximité de l'entrée et de la sortie de l'aire de contact, les rayons R3 ont une compression radiale intermédiaire. La compression radiale des rayons 5 est directement fonction de la distance radiale entre l'élément intérieur et l'élément extérieur, donc de la flèche prise par la roue lors de son écrasement sur le sol.

Comme chaque rayon est en état de post flambement, il exerce sur l'élément extérieur 4 une force de réaction sensiblement constante. Dans la zone de contact entre le sol et la roue, l'aire de contact, l'élément extérieur ou bande de roulement exerce donc sur le sol une pression moyenne sensiblement constante. Cette force n'est pratiquement pas modifiée par l'amplitude de la compression radiale supportée par le rayon 5, la pression exercée par l'élément extérieur annulaire dans la zone correspondante est ainsi sensiblement indépendante de l'amplitude de la flèche prise par la roue écrasée. Ce comportement est ainsi très proche de celui d'un pneumatique. Cela permet d'absorber des irrégularités du sol sans entraîner des réactions brutales transmises au disque de la roue, ni générer de variations significatives de la surface de contact entre la roue et le sol. C'est un comportement très proche de celui d'un pneumatique.

La figure 7 illustre l'évolution d'un seul des deux ensembles de poutres dans (7b) et en dehors de l'aire de contact (7a). Trois cas se présentent : les poutres dont les points d'ancrage aux éléments intérieur et extérieur sont en dehors de l'aire de contact (7a) - poutres H1 - sont en état de légère tension ; les poutres - poutres H2 - dont les points d'ancrage à l'élément extérieur sont dans l'aire de contact, entre les points E et F, sont en état de flambement ; les poutres disposées à l'entrée et à la sortie de l'aire de contact - poutres H3 - sont dans un état intermédiaire. On constate ainsi que les poutres dont un point d'ancrage est dans l'aire de contact ont leur tension relâchée par la compression radiale de l'élément extérieur qui rapproche les points d'ancrage des poutres entre l'élément intérieur et l'élément extérieur. En conséquence, ces poutres, dont la section est petite, passent en flambement et ne s'opposent que faiblement à cette compression radiale de l'élément extérieur dans l'aire de contact ou lors d'un roulage sur un obstacle.

La roue présentée présente aussi l'avantage d'avoir une excellente homogénéité des pressions de contact entre l'élément extérieur annulaire et un sol plan dans la direction axiale du fait de la symétrie de construction des rayons qui apparaît à la figure 2.

On peut aisément réaliser un élément extérieur 4 en vulcanisant une épaisseur de caoutchouc sur une ceinture. Cette ceinture peut être une tôle d'acier plate de largeur *L* et d'épaisseur 0,1 mm.

La structure déformable selon l'invention peut aussi être pourvue de moyens pour limiter la compression radiale des rayons tels des butées. A titre d'exemple, on peut prévoir entre les deux ensembles juxtaposés axialement de rayons des figures 1 à 3, une butée annulaire fixée à l'élément intérieur de diamètre extérieur tel qu'il limite à 50 % environ la compression axiale maximale de ces rayons.

Dans les exemples présentés aux figures 1 à 3, on a disposé deux ensembles de rayons juxtaposés axialement, il est tout à fait possible d'augmenter sensiblement ce nombre d'ensembles juxtaposés axialement pour améliorer le comportement sur sol inégal de la roue ou de l'insert formé. De même, l'élément extérieur peut être formé d'un ou de plusieurs éléments axialement juxtaposés.

## Revendications

1. Structure déformable (1) pour véhicule, destinée à rouler autour d'un axe de rotation, comprenant un élément intérieur annulaire (3) centré sur l'axe, un élément extérieur annulaire (4) formant bande de roulement, flexible et sensiblement inextensible, disposé radialement extérieurement relativement audit élément intérieur (3), une pluralité de rayons (5, 52, 53, 56) disposés sensiblement radialement entre l'élément intérieur (3) et l'élément annulaire extérieur (4), chaque rayon étant propre à opposer à une sollicitation de compression radiale, au-delà d'un seuil donné, un effort sensiblement constant, ledit élément extérieur (4) ayant une longueur circonférentielle telle que lesdits rayons (5, 52, 53, 56) sont préchargés en compression radiale, ainsi que des moyens de stabilisation (6, 7) des positions relatives de l'élément intérieur (3) et de l'élément extérieur (4), **caractérisée en ce que** lesdits rayons (5, 52, 53, 56) sont conformés et disposés entre les éléments intérieur (3) et extérieur (4) de telle sorte que leur flexibilité dans un plan méridien est très inférieure à leur flexibilité dans un plan circonférentiel et **en ce que** lesdits moyens de stabilisation (6, 7) limitent l'amplitude d'une rotation relative circonférentielle entre l'élément intérieur (3) et l'élément extérieur (4).

2. Structure déformable (1) selon la revendication 1, dans laquelle les rayons (5, 52, 53, 56) sont préchargés au-delà de leur charge de flambement.

3. Structure déformable (1) selon l'une des revendications 1 ou 2, dans laquelle les moyens de stabilisation (6, 7) comprennent des éléments de liaison élastiques (6, 7) reliant de façon non radiale l'élément extérieur (4) et l'élément intérieur (3).

4. Structure déformable (1) selon la revendication 3, dans laquelle les éléments de liaison élastiques (6, 7) sont en tension lorsque ladite structure (1) est au repos.

5. Structure déformable (1) selon l'une des revendication 3 et 4, dans laquelle les éléments de liaison élastiques (6, 7) relient des points de l'élément extérieur annulaire (4) et de l'élément intérieur (3) séparés angulairement, au repos, par un angle α compris entre 1 et 45 degrés.

6. Structure déformable (1) selon la revendication 5, dans laquelle les éléments de liaison élastiques (6, 7) relient des points de l'élément extérieur annulaire (4) et de l'élément intérieur (3) séparés angulairement, au repos, par un angle α compris entre 25 et 35 degrés.

7. Structure déformable (1) selon l'une des revendications 3 à 6, dans laquelle les éléments de liaison élastiques sont des câbles (6) précontraints en extension.

8. Structure déformable (1) selon l'une des revendications 1 à 7, dans laquelle les moyens de stabilisation comprennent un voile mince précontraint en extension radiale disposé entre les éléments intérieur (3) et extérieur (4).

9. Structure déformable (1) selon l'une des revendications 1 à 8, dans laquelle les extrémités des rayons (56) sont fixées par encastrement à l'élément intérieur (3) et/ou l'élément extérieur (4).

10. Structure déformable (1) selon l'une des revendications 1 à 9, dans laquelle les extrémités des rayons sont fixées par des articulations (51) à l'élément intérieur (3) et/ou l'élément extérieur (4).

11. Structure déformable (1) selon l'une des revendications 1 à 10, comprenant des moyens pour limiter l'amplitude de la compression radiale des rayons.

12. Roue non pneumatique pour véhicule **caractérisée en ce qu'**elle comprend un disque (2) et une structure déformable (1) selon l'une des revendications 1 à 11.

13. Insert de sécurité pour véhicule, destiné à être monté dans un ensemble constitué d'un pneumatique et d'une jante, **caractérisé en ce qu'**il est constitué d'une structure déformable (1) selon l'une des revendications 1 à 11.

## Patentansprüche

1. Verformbare Struktur (1) für ein Fahrzeug, die dazu bestimmt ist, rund um eine Drehachse abzurollen, mit einem auf der Achse zentriertes, kreisringförmiges, inneres Element (3), ein kreisringförmiges, äusseres Element (4), das eine flexible und im wesentlichen undehnbare Lauffläche bildet, das bezüglich des inneren Elements (3) radial außerhalb angeordnet ist, eine Vielzahl von Speichen (5, 52, 53, 56), die im wesentlichen radial zwischen dem inneren Element (3) und dem äußeren (4) Element angeordnet sind, wobei jede Speiche dazu eingerichtet ist, einer radialen Druckbelastung jenseits eines vorgegebenen Schwellenwertes eine im wesentlichen konstante Kraft entgegenzusetzen, und das äußere, kreisringförmige Element (4) eine solche Umfangslänge aufweist, daß die genannten Speichen (5, 52, 53, 56) auf radialen Druck vorbelastet sind, sowie Mittel zur Stabilisation (6, 7) der Relativlagen des inneren Elements (3) und des äußeren Elements (4), **dadurch gekennzeichnet, daß** die genannten Speichen (5, 52, 53, 56) zwischen dem inneren (3) und dem äußeren (4) Element derart ausgebildet und angeordnet sind, daß ihre Flexibilität in einer Meridianebene sehr viel kleiner ist als ihre Flexibilität in einer Umfangsebene, und daß die genannten Stabilisationsmittel (6, 7) die Amplitude einer Umfangs-Relativdrehung zwischen dem inneren (3) und dem äußeren (4) Element begrenzen.

2. Verformbare Struktur (1) nach Anspruch 1, worin die Speichen (5, 52, 53, 56) bis über ihre Knicklast vorbelastet sind.

3. Verformbare Struktur (1) nach einem der Ansprüche 1 oder 2, worin die Stabilisationsmittel (6, 7) elastische Verbindungselemente (6, 7) aufweisen, die in nicht-radialer Weise das äußere Element (4) und das innere Element (3) verbinden.

4. Verformbare Struktur (1) nach Anspruch 3, worin die elastischen Verbindungselemente (6, 7) sich unter Zugspannung befinden, wenn sich die genannte Struktur (1) in Ruhe befindet.

5. Verformbare Struktur (1) nach einem der Ansprüche 3 und 4, worin die elastischen Verbindungsmittel (6, 7) Punkte des äußeren, kreisringförmigen Elements (4) und des inneren Elements (3) verbinden, die in der Ruhe winklig durch einen Winkel α getrennt sind, der zwischen 1 und 45 Grad liegt.

6. Verformbare Struktur (1) nach Anspruch 5, worin die elastischen Verbindungselemente (6, 7) Punkte des äußeren, kreisringförmigen Elements (4) und des inneren Elements (3) verbinden, die in der Ruhe winklig durch einen Winkel α getrennt sind, der zwischen 25 und 35 Grad liegt.

7. Verformbare Struktur (1) nach einem der Ansprüche 3 bis 6, worin die elastischen Verbindungselemente auf Dehnung vorbelastete Seile (6) sind.

8. Verformbare Struktur (1) nach einem der Ansprüche 1 bis 7, worin die Stabilisationsmittel einen auf radiale Dehnung vorgespannten, dünnen Schleier aufweisen, der zwischen dem inneren (3) und äußeren (4) Element angeordnet ist.

9. Verformbare Struktur (1) nach einem der Ansprüche 1 bis 8, worin die Enden der Speichen (56) durch Einspannen in das innere Element (3) und/oder das äußere Element (4) befestigt sind.

10. Verformbare Struktur (1) nach einem der Ansprüche 1 bis 9, worin die Enden der Speichen durch Anlenkungen (51) am inneren Element (3) und/oder äußeren Element (4) befestigt sind.

11. Verformbare Struktur (1) nach einem der Ansprüche 1 bis 10, mit Mitteln zum Begrenzen der Amplitude der radialen Kompression der Speichen.

12. Nichtpneumatiches Rad für ein Fahrzeug, **dadurch gekennzeichnet, daß** es eine Scheibe (2) und eine verformbare Struktur (1) nach einem der Ansprüche 1 bis 11 aufweist.

13. Sicherheitseinlage für ein Fahrzeug, die dazu bestimmt ist, in einer Baugruppe angebracht zu werden, die aus einem Luftreifen und einer Felge gebildet ist, **dadurch gekennzeichnet, daß** sie durch eine verformbare Struktur (1) nach einem der Ansprüche 1 bis 11 gebildet ist.

## Claims

1. Deformable structure (1) for a vehicle, which is intended to roll about an axis of rotation, comprising an annular internal element (3) centred on the axis, an annular external element (4) forming a tread, which is flexible and substantially inextensible, arranged radially externally relative to said internal element (3), a plurality of spokes (5, 52, 53, 56) arranged substantially radially between the internal element (3) and the external annular element (4), each spoke being capable of opposing a radial compressive stress, beyond a given threshold, a substantially constant force, said external element (4) having a circumferential length such that said spokes (5, *52,* 53, 56) are preloaded in radial compression, as well as means of stabilisation (6, 7) of the relative positions of the internal element (3) and external element (4), **characterized in that** said spokes (5, 52, 53, 56) are formed and arranged between the internal (3) and external (4) elements, in such a way that their flexibility in a meridian plane is well below their flexibility in a circumferential plane, and **in that** said stabilisation means (6, 7) limit the amplitude of a circumferential relative rotation between the internal element (3) and the external element (4).

2. Deformable structure (1) according to Claim 1, in which the spokes (5, 52, 53, 56) are preloaded beyond their buckling load.

3. Deformable structure (1) according to one of Claims 1 or 2, in which the stabilisation means (6, 7) comprise elastic connecting elements (6, 7) non-radially joining the external element (4) and the internal element (3).

4. Deformable structure (1) according to Claim 3, in which the elastic connecting elements (6, 7) are taut when said structure (1) is at rest.

5. Deformable structure (1) according to one of Claims 3 and 4, in which the elastic connecting elements (6, 7) join points of the annular external element (4) and the internal element (3) which are angularly separated at rest by an angle α ranging between 1 and 45 degrees.

6. Deformable structure (1) according to Claim 5, in which the elastic connecting elements (6, 7) join points of the annular external element (4) and the internal element (3) angularly separated at rest by an angle α ranging between 25 and 35 degrees.

7. Deformable structure (1) according to one of Claims 3 to 6, in which the elastic connecting elements are cables (6) prestressed in extension.

8. Deformable structure (1) according to one of Claims 1 to 7, in which the stabilisation means comprise a thin shell prestressed in radial extension, placed between the internal (3) and external (4) elements.

9. Deformable structure (1) according to one of Claims 1 to 8, in which the ends of the spokes (56) are embedded in the internal element (3) and/or external element (4).

10. Deformable structure (1) according to one of Claims 1 to 9, in which the ends of the spokes are fastened by joints (51) to the internal element (3) and/or external element (4).

11. Deformable structure (1) according to one of Claims 1 to 10, including means for limiting the amplitude of radial compression of the spokes.

12. Non-pneumatic wheel for a vehicle, **characterized in that** it comprises a disc (2) and a deformable structure (1) according to one of Claims 1 to 11.

13. Safety insert for a vehicle, designed to be mounted in an assembly consisting of a tyre and a rim, **characterized in that** it is constituted by a deformable structure (1) according to one of Claims 1 to 11.
